# EUROPEAN PATENT SPECIFICATION

(11) **EP 1 389 038 B1**
(45) Date of publication and mention of the grant of the patent: **01.10.2008**
(21) Application number: 01986950.2
(22) Date of filing: 23.11.2001
(51) Int. Cl.: A01D 90/08

(54) **BALE HANDLING MACHINE**
MASCHINE ZUM HANDHABEN VON BALLEN
MATERIEL DE MANUTENTION DE BALLES

(30) Priority: 19.04.2001 GB 0109614
(43) Date of publication of application: 18.02.2004
(73) Proprietor: Walton, John, Dowson, N Yorks DL7 0JN (GB)
(72) Inventor: Walton, John, Dowson, N Yorks DL7 0JN (GB)
(74) Representative: Hackney, Nigel John
(86) International application number: PCT/GB2001/005154
(87) International publication number: WO 2002/085099

(56) References cited:
- WO-A1-01/37635
- DE-U1- 9 004 981
- FR-A1- 2 743 690
- GB-A- 2 026 429
- US-A- 3 450 281
- US-A- 3 478 898
- US-A- 3 788 495
- US-A- 4 498 829
- LA FRANCE AGRICOLE, 27 October 1995 (1995-10-27), pages 44-44,

## Description

This invention relates tu a machine for collecting, stacking and transporting bales of various straws commonly found as a by product of agricultural crops.

The particular features of this machine offer increased versatility and speed. Whilst handling large square bales of any size, it can cross the joints of subsequent layers (tie) and safety pick up previously made stacks and transport them.

There are currently a small number of stacking machines such as one described in Patent Number GB 2273280A and while these machines have distinguishing features, they do not tie or retrieve stacks, which tends to limit their application.

One such machine has an arm and tines that pick up the bales but it has 2 pivotal sections and is extendible in order to form the stack. The axis of rotation of this arm is at 90" to the direction of travel. Within my invention, the arm is pivotal in one section only on an axis that is parallel to the direction of travel and is used to only pickup bales. The tines may be attached to sub frames pivotal within the lifting arm to assist attachment of the bales.

Page 44 of the magazine "la France Agricole", published 27 October 1995, discloses a bale stacking machine called a DLM bale stacking machine. This is a trailed machine with a pickup arm pivoted on an axis parallel to the direction of motion of the machine, which pickup arm includes a claw that becomes implanted in a bale, rocks, and places the bale on a platform.

The machine described is a trailer type being towable by a tractor. A self propelled unit could also be considered. At the front of the chassis (1) is a guide frame (2) that can move from a transport position to a position of protrusion from the side of the trailer. As the trailer is drawn forward along side the bale (3) the guide contacts one side and one end of the bale and pushes it along the ground in a relatively fixed position to the machine.

A number of (curved) tines (5) are fixed to a sub-frame(s) (6) which is pivoted on an axis (7) and permits the tines to move from a position which is inside and clear of the lift frame (4) to a position where the tines are penetrating the inner side of the bale. In the preferred design the tines will penetrate the bale at opposing angles to secure the bale in position and prevent the bale sliding off the tines. When the bale is secure, the arm (4) complete with tines and bale swings through substantially 180° on an axis (14) parallel to the direction of travel. Thus swinging the bale out from the machine and off the ground. Full rotation of the arm will result in the frame being substantially vertical and the bale at rest, inverted on the hooked table (6). Subsequent bales will be loaded and will push the first bale (15) along the hooked table until it is full. When the hooked table is full, a plurality of hooks (8) may secure the bales before the table pivots up vertically about axis (9) and positions the bales on the load platform (10). The hooked table can pivot through 90° on pivot (11) and thus cross the joints of subsequent layers.

The hooked table may move forward on a substantially parallel linkage (12) or on wheels/slides and track and position the final layer of bales on the extension (13) that may slide from the front of the load platform.

When the stack is complete the hooked table (6) can be left in the vertical position and in combination with the hooks will secure the last layer of bales during transport. The aforementioned linkage (12) can be used to adjust the position of the table (when used as a head frame) to accommodate different sizes of bales and stacks. Clamp arms (16) and sides (17) are pivotal at their bases to enable clamping of the load during transport and erection.

### Forks (See Fig II)

A number of fork(s) (1) are pivoted on a carriage (2) which runs up and down the channels of the load platform (3) via wheels (4). A cylinder or cylinders (5) support the fork vertically and permit the fork to lower to a horizontal position (12). The carriages are held against the bales via pressure from a cylinder (11) pushing on pulley (10) and tensioning cable (7) against anchor (9). A hydraulic supply to cylinder(5) can be similarly routed via flexible hose (6) supplied by manifold (8). The forks can be connected at their ends by a longeron.

In another example of this mechanism the cables could be replaced by a transmission chain or toothed belt and cylinder (11) replaced by a sprocket and motor arrangement.

A number of or a skid(s) (1) are fixed to the load platform (2) to form an arc whose centre is substantially coincident with the pivot point (3). The skid(s) extend downwards such that it contacts the ground substantially as the centre of gravity of the stack moves behind the centre of the wheel/axle centre arrangement, as the stack platform tips to the vertical. Wheels (4) are positioned such that their circumference extends beyond the curved skid circumference so that at a point, when the stack is almost vertical, the wheels carry all the load and thus permit the almost erect stack to be positioned just prior to being fully erected. Further, these wheels may be mounted so that they can be retracted or extended, as required. This may be arranged to operate under load by using hydraulic pressure for example.

### Operation

The machine is drawn onto the bales until it is located in the guide arrangement at the side of the machine. The bales are spiked by the tined arm and swung upside down on to the hooked table. (As the tines are withdrawn a smaller pivotal frame may be coupled to the pick up frame to slide the bale along the hooked frame as the tines return underneath in preparation for the next bale).

Subsequent bales slide previous bales along the table until the table is full. The table then pivots up to the vertical position and places the bales on the load platform against slideable forks. As the table rises, it can pivot through 90° and cross the joints of adjacent layers of bales.

More layers of bales push the emerging stack and supporting forks down the load platform.

When the bales reach the end of the load platform they can be clamped in position, the forks lowered through 90° and drawn clear under the bales to allow erection of the stack directly onto the ground.

Another layer of bales on the hook platform can be moved forward before being swung up onto the now extended load platform. The hooked table can be used to restrain these bales during transport.

The completed stack is ejected when the load platform tips up 90° and erects the stack to its vertical position where the clamps are released. Before the stack reaches the vertical, curved skids (at the base of the platform) contact the ground and roll the stack into its final position. These curved skids prevent adverse moments lifting the tractor unit. Similarly, previously made stacks can be picked up and moved.

## Claims

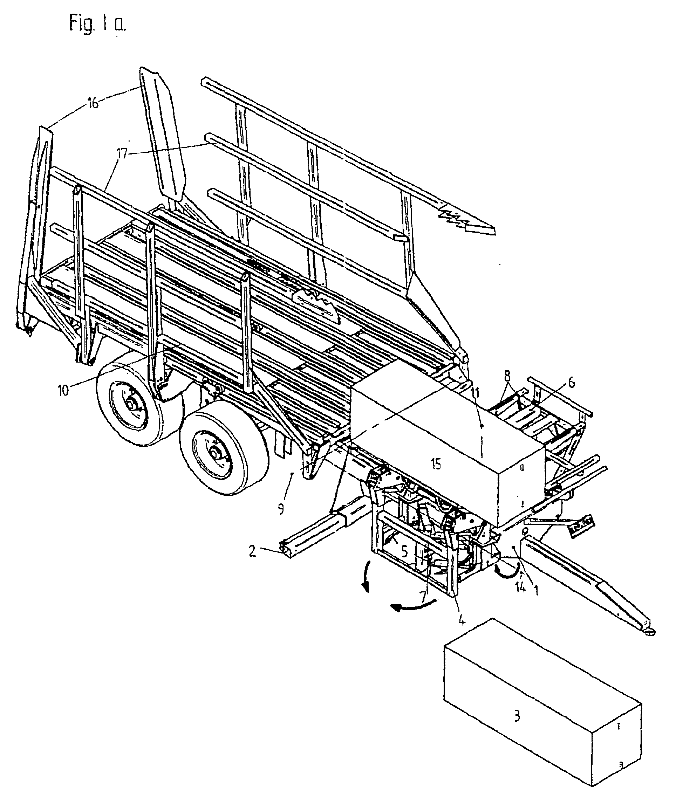

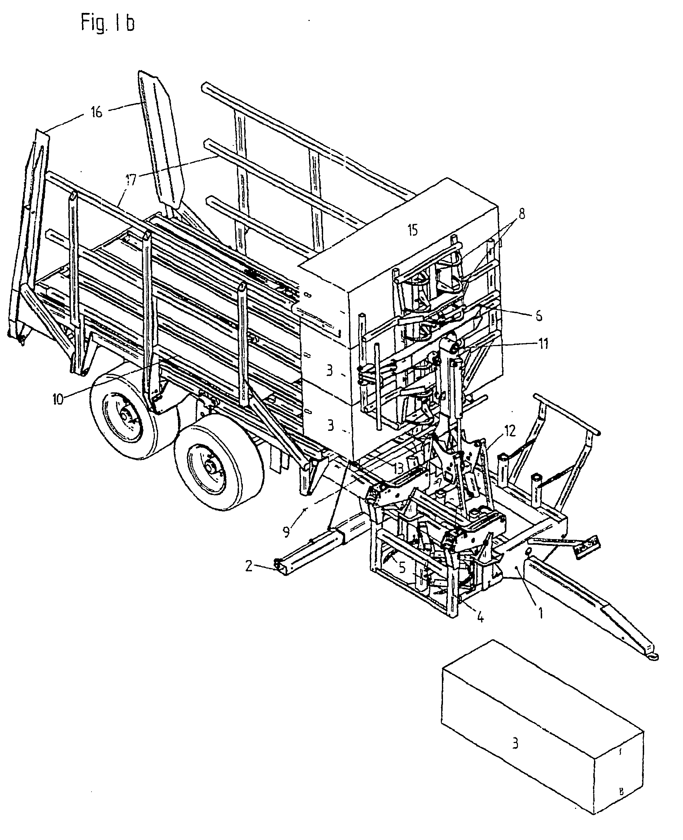

1. A self-propelled or trailed bale stacking machine having a pickup arm (4 - Figs. 1a & 1b) that is pivotable on a longitudinal axis (14 - Figs. 1a & 1b) that is substantially parallel to the direction of motion or to the longitudinal axis of the machine, the pickup arm including tines (5 - Figs. 1a & 1b) attached thereto arranged to penetrate and secure a bale (3 - Figs. 1a & 1b) to the pickup arm and, with the bale so penetrated and secured, the pickup arm and attached tines are swingable about the longitudinal axis through substantially 180° to place the bale upside-down on a table (6 - Figs. 1a & 1b);
**characterised in that** the machine is arranged such that the tines are pivotable, to penetrate and secure the bale to the pickup arm, about an axis (7 - Fig. 1a) that is vertical when the machine is arranged such that the bale is penetrated and secured to the pickup arm but before the pickup arm is swung through the substantially 180° to place the bale upside-down on the table.

2. A machine according to claim 1 wherein the tines (5 - Figs. 1a & 1b) are attached to the pickup arm (4 - Figs. 1a & 1b) by means of hinged sub frames to facilitate movement of the tines independently of the pickup arm.

3. A machine according to any one of the preceding claims, wherein the tines (5 - Figs. 1a & 1b) are arranged to penetrate the bale (3 - Figs. 1a & 1b) at opposing angles to secure the bale in position relative to the pickup arm (4 - Figs. 1a & 1b) and prevent the bale sliding off the tines.

4. A machine according to any one of the preceding claims wherein the tines (5 - Figs. 1a & 1b) are curved.

5. A machine according to any one of the preceding claims wherein the tines (5 - Figs. 1a & I b) are so pivoted that the machine is arranged such that the penetration of the tines into the bale (3 - Figs. 1a & 1b) results in the bale being pulled towards the pickup arm (4 - Figs. 1a & 1b).

6. A machine according to any one of the preceding claims wherein the table (6 - Figs. 1a & 1b) has hooks or clamps (8 - Figs. 1a & 1b) to secure bales (3 - Figs. 1a & 1b) in position relative to the table.

7. A machine according to any one of the preceding claims wherein the table (6 - Figs. 1a & 1b) is rotatable through 90°.

8. A machine according to claim 7, wherein the table (6 - Figs. 1a & 1b) is rotatable through 90° about an axis (11 - Figs. 1a & 1b) that is perpendicular to the surface of the table on which bales (3 - Figs. 1a & 1b) are placeable.

9. A machine according to any one of the preceding claims wherein the table (6 - Figs. 1a & 1b) is pivotable about a horizontal axis perpendicular to the direction of motion or to the longitudinal axis of the machine.

10. A machine according to claim 9 wherein the table (6 - Figs. 1a & 1b) is pivotable about a horizontal axis perpendicular to the direction of motion or to the longitudinal axis of the machine to a position at which the surface of the table on which bales (3 - Figs. 1a & 1b) are placeable is substantially vertical.

11. A machine according to any one of the preceding claims including a load platform (10 - Figs. 1a & 1b; 3 - Fig. 2; 2 - Fig. 3) onto which bales (3 - Figs. 1a & 1b) are transferable from the table (6 - Figs. 1a & 1b).

12. A machine according to claim 11 wherein the load platform (10 - Figs. 1a & 1b; 3-Fig. 2; 2 - Fig. 3) is tippable to eject bales (3 - Figs. 1a & 1b) from the load platform to form a stack of bales adjacent the machine.

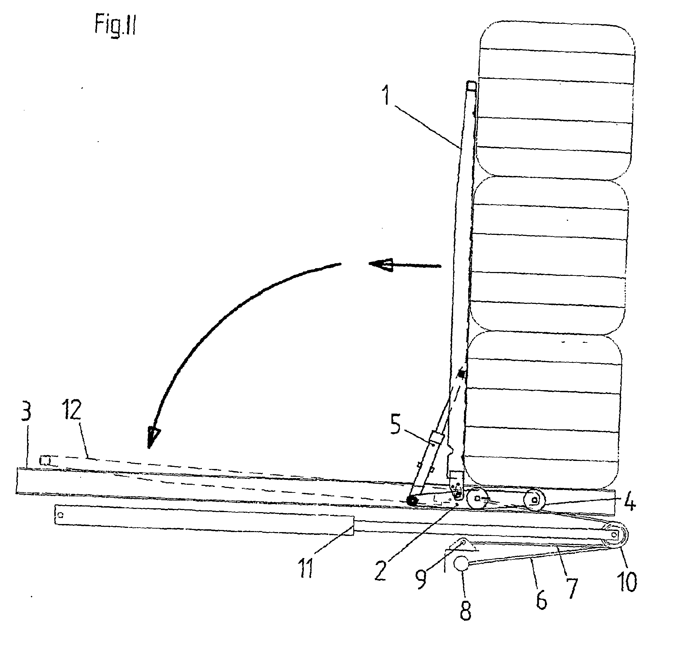

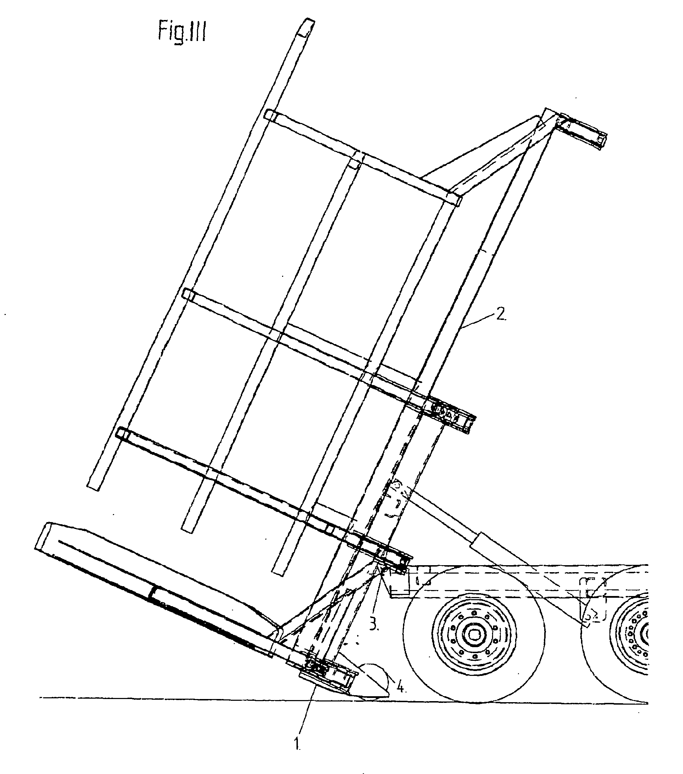

13. A machine according to claim 12 wherein the load platform (10 - Figs. 1a & 1b; 3 - Fig. 2; 2 - Fig. 3) includes one or more curved skids (1 - Fig. 3) arranged to contact the ground when the load platform is tipped to support the weight of the stack and the machine and to prevent lifting moments at the front of the machine.

14. A machine according to claim 13 wherein the load platform (10 - Figs. 1a & 1b; 3 - Fig. 2; 2 - Fig. 3) includes one or more wheels (4 - Fig. 3) or rollers to facilitate manoeuvre of an almost erect stack.

## Patentansprüche

1. Selbstfahrende oder Anhänge-Ballenstapelmaschine mit einem Aufnahmearm (4 - Fig. 1 a und 1 b), der um eine Längsachse (14 - Fig. 1 a und 1 b) schwenkbar ist, die im Wesentlichen parallel zur Bewegungsrichtung oder zur Längsachse der Maschine ist, wobei der Aufnahmearm an diesem angebrachte Zinken (5 - Fig. 1a und 1b) aufweist, die angeordnet sind, um einen Ballen (3 - Fig. 1a und 1b) zu durchdringen und diesen an dem Aufnahmearm festzuhalten, wobei der Aufnahmearm und die an diesem befestigten Zinken mit so durchdrungenen und festgehaltenen Ballen um die Längsachse um im Wesentlichen 180° schwenkbar sind, um den Ballen auf dem Kopf stehend auf einem Tisch (6 - Fig. 1a und 1b) zu platzieren;
**dadurch gekennzeichnet, dass** die Maschine derart eingerichtet ist, dass die Zinken zum Eindringen in den Ballen und zum Festhalten des Ballens am Aufnahmearm um eine Achse (7 - Fig. 1 a) schwenkbar sind, die vertikal verläuft, wenn die Maschine derart angeordnet ist, dass der Ballen durchdrungen und an dem Aufnahmearm festgehalten wird, aber noch bevor der Aufnahmearm um die im Wesentlichen 180° geschwenkt wird, um den Ballen auf dem Kopf stehend auf dem Tisch zu platzieren.

2. Maschine nach Anspruch 1, worin die Zinken (5 - Fig. 1a und 1b) mittels schwenkbarer Hilfsrahmen an dem Aufnahmearm (4 - Fig. 1a und 1 b) befestigt sind, um die Bewegung der Zinken unabhängig von dem Aufnahmearm zu erleichtern.

3. Maschine nach einem der vorangegangenen Ansprüche, worin die Zinken (5 Fig. 1 a und 1 b) angeordnet sind, um in den Ballen (3 - Fig. 1 a und 1 b) in entgegengesetzt orientierten Winkeln einzudringen, um den Ballen in Bezug auf den Aufnahmearm (4 - Fig. 1a und 1b) in einer Position festzuhalten und zu verhindern, dass er von den Zinken rutscht.

4. Maschine nach einem der vorangegangenen Ansprüche, worin die Zinken (5 - Fig. 1a und 1b) gekrümmt sind.

5. Maschine nach einem der vorangegangenen Ansprüche, worin die Zinken (5 - Fig. 1a und 1b) so geschwenkt werden, dass die Maschine derart angeordnet ist, dass das Eindringen der Zinken in den Ballen (3 - Fig. 1a und 1 b) dazu führt, dass der Ballen in Richtung des Aufnahmearms (4 - Fig. 1a und 1 b) gezogen wird.

6. Maschine nach einem der vorangegangenen Ansprüche, worin der Tisch (6 - Fig. 1 a und 1 b) Haken oder Klemmen (8 - Fig. 1 a und 1 b) zum Festhalten der Ballen (3 - Fig. 1a und 1 b) in einer Position in Bezug auf den Tisch aufweist.

7. Maschine nach einem der vorangegangenen Ansprüche, worin der Tisch (6 - Fig. 1a und 1 b) um 90° drehbar ist.

8. Maschine nach Anspruch 7, worin der Tisch (6 - Fig. 1a und 1 b) um 90° um eine Achse (11 - Fig. 1a und 1 b) drehbar ist, die im rechten Winkel auf die Oberfläche des Tischs steht, auf der die Ballen (3 - Fig. 1a und 1 b) platzierbar ist.

9. Maschine nach einem der vorangegangenen Ansprüche, worin der Tisch (6 - Fig. 1a und 1b) um eine horizontale Achse schwenkbar ist, die im rechten Winkel auf die Bewegungsrichtung oder die Längsachse der Maschine steht.

10. Maschine nach Anspruch 9, worin der Tisch (6 - Fig. 1 a und 1 b) um eine horizontale Achse, die im rechten Winkel auf die Bewegungsrichtung oder die Längsachse der Maschine steht, in eine Position schwenkbar ist, in der die Oberfläche des Tischs, auf der die Ballen (3 - Fig. 1a und 1 b) platzierbar sind, im Wesentlichen vertikal ist.

11. Maschine nach einem der vorangegangenen Ansprüche, einschließlich einer Ladeplattform (10 - Fig. 1a und 1b; 3 - Fig. 2; 2 - Fig. 3), auf die die Ballen (3 - Fig. 1 a und 1 b) von dem Tisch (6 - Fig. 1 a und 1 b) übergebbar sind.

12. Maschine nach Anspruch 11, worin die Ladeplattform (10 - Fig. 1a und 1b; 3 - Fig. 2; 2 - Fig. 3) kippbar ist, um die Ballen (3 - Fig. 1a und 1 b) von der Ladeplattform zur Bildung eines Ballenstapels neben der Maschine auszuwerfen.

13. Maschine nach Anspruch 12, worin die Ladeplattform (10 - Fig. 1a und 1b; 3 - Fig. 2; 2 - Fig. 3) einen oder mehrere gekrümmte Stützbalken (1 - Fig. 3) umfasst, die angeordnet sind, um den Boden zu kontaktieren, wenn die Ladeplattform gekippt wird, um das Gewicht des Stapels und der Maschine abzustützen und Hebemomente an der Vorderseite der Maschine zu verhindern.

14. Maschine nach Anspruch 13, worin die Ladeplattform (10 - Fig. 1a und 1b; 3 - Fig. 2; 2 - Fig. 3) ein oder mehrere Räder (4 - Fig. 2) oder Rollen umfasst, um das Manövrieren eines fast aufgestellten Stapels zu erleichtern.

## Revendications

1. Machine d'empilage de balles auto-propulsée ou tractée comportant un bras ramasseur (4 - figures la et 1b) apte à pivoter le long d'un axe longitudinal (14 - figures 1a et 1b) qui est sensiblement parallèle à la direction de mouvement ou à l'axe longitudinal de la machine, le bras ramasseur comportant des dents (5 - figures la et 1b) fixées à celui-ci, agencées pour passer dans et immobiliser une balle (3 - figures 1a et 1b) au bras ramasseur et, la balle étant ainsi transpercée et, immobilisée, le bras ramasseur et les dents attachées peuvent pivoter autour de l'axe longitudinal sur sensiblement 180° pour placer la balle sens dessus-dessous sur une table (6 - figures la et 1b) ;
**caractérisée en ce que** la machine est agencée de telle sorte que les dents sont pivotantes pour passer dans et fixer la balle au bras ramasseur, autour d'un axe (7 - figure la) qui est vertical lorsque la machine est agencée de telle sorte que la balle est transpercée et fixée au bras ramasseur mais avant que le bras ramasseur ne soit amené à pivoter selon sensiblement 180° pour placer la balle sens dessus-dessous sur la table.

2. Machine selon la revendication 1, où les dents (5 - figures la et 1b) sont fixées au bras ramasseur (4 - figures la et 1b) par des sous-châssis articulés pour faciliter le mouvement des dents indépendamment du bras ramasseur.

3. Machine selon l'une des revendications précédentes, où les dents (5 - figures la et 1b) sont agencées pour pénétrer dans la balle (3 - figures 1a et 1b) à des angles opposés pour fixer la balle en position relativement au bras ramasseur (4 - figures 1a et 1b) et pour empêcher que la balle glisse des dents.

4. Machine selon l'une des revendications précédentes, où les dents (5 - figures la et 1b) sont courbées.

5. Machine selon l'une des revendications précédentes, où les dents (5 - figures 1a et 1b) sont amenées à pivoter de telle sorte que la machine est agencée de façon que la pénétration des dents dans la balle (3 - figures 1a et 1b) se traduit par le fait que la balle est tirée vers le bras ramasseur (4 - figures la et 1b).

6. Machine selon l'une des revendications précédentes, où la table (6 - figures 1a et 1b) présente des crochets ou pinces (8 - figures 1a et 1b) pour fixer les balles (3 - figures 1a et 1b) en position relativement à la table.

7. Machine selon l'une des revendications précédentes, où la table (6 - figures la et 1b) peut tourner sur 90°.

8. Machine selon la revendication 7, où la table (6 - figures 1a et 1b) peut tourner sur 90° autour d'un axe (11 - figures 1a et 1b) qui est perpendiculaire à la surface de la table sur laquelle les balles (3 - figures la et 1b) peuvent être placées.

9. Machine selon l'une des revendications précédentes, où la table (6 - figures 1a et 1b) peut pivoter autour d'un axe horizontal perpendiculaire à la direction de mouvement ou à l'axe longitudinal de la machine.

10. Machine selon la revendication 9, où la table (6 - figures la et 1b) peut pivoter autour d'un axe horizontal perpendiculaire à la direction de mouvement ou à l'axe longitudinal de la machine à une position à laquelle la surface de la table sur laquelle les balles (3 - figures 1a et 1b) peuvent être placées, est sensiblement verticale.

11. Machine selon l'une des revendications précédentes, comprenant une plateforme de chargement (10 - figures 1a et 1b ; 3 - figure 2 ; 2 - figure 3) sur laquelle les balles (3 - figures la et 1b) peuvent être transférées de la table (6 - figures la et 1b).

12. Machine selon la revendication 11, où la plateforme de chargement (10 - figures 1a et 1b ; 3 - figure 2 ; 2 - figure 3) est basculable pour éjecter les balles (3 - figures la et 1b) de la plateforme de chargement pour former une pile de balles adjacente à la machine.

13. Machine selon la revendication 12, où la plateforme de chargement (10 - figures 1a et 1b ; 3 - figure 2 ; 2 - figure 3) comprend un ou plusieurs sabots courbés (1 - figure 3) agencés pour venir en contact avec le sol lorsque la plateforme de chargement est basculée pour supporter le poids de la pile et de la machine et pour empêcher des mouvements de relevage à l'avant de la machine.

14. Machine selon la revendication 13, où la plateforme de chargement (10 - figures 1a et 1b ; 3 - figure 2 ; 2 - figure 3) comprend une ou plusieurs roues (4 - figure 3) ou rouleaux pour faciliter la manoeuvre d'une pile presque érigée.
